# EUROPEAN PATENT SPECIFICATION

(11) **EP 3 034 478 B1**
(45) Date of publication and mention of the grant of the patent: **16.11.2022**
(21) Application number: 15003595.4
(22) Date of filing: 17.12.2015
(51) Int. Cl.: C03B 33/07, B24B 9/10, C03B 33/10

(54) **APPARATUS FOR TREATING THE SURFACE OF SHEET ELEMENTS, SUCH AS GLASS SHEETS**
VORRICHTUNG ZUR BEHANDLUNG DER OBERFLÄCHE VON SCHEIBENELEMENTEN, WIE ETWA GLASSCHEIBEN
APPAREIL DE TRAITEMENT DE LA SURFACE D'ÉLÉMENTS EN FEUILLES, TELS QUE DES FEUILLES DE VERRE

(30) Priority: 18.12.2014 IT MI20142178
(43) Date of publication of application: 22.06.2016
(73) Proprietor: Macotec S.R.L., 23010 Rogolo, (SO) (IT)
(72) Inventor: Colli, Maurizio, 23019 Traona (Sondrio) (IT); de Stefani, Matteo, 23020 Verceia (Sondrio) (IT)
(74) Representative: Forattini, Amelia

(56) References cited:
- EP-A1- 1 777 201
- EP-A1- 2 492 245
- EP-A2- 2 279 983
- JP-A- 2003 335 536
- US-A1- 2005 056 127

## Description

The present invention relates to an apparatus for treating the surface of sheet elements, particularly glass sheets and the like.

It is known to give glass solar control properties, i.e. the reduction of ambient heating due to sunlight or the retention of heat inside the dwelling. Low emissivity glass panes, i.e. glass panes that have a metal oxides coating of a few microns on one side, have been commercially available for years. Those glass panes are generally used in double glazing units.

In order to be able to assemble this low-emissivity glass pane correctly in a double glazing panel, it is necessary to remove the coating along the perimeter where the glass pane is bonded to the spacer, in order to ensure good adhesion of the adhesive to the glass pane and prevent the transmission of oxidation from the outside to the inside of the unit, because the coated side is always mounted on the inside of the double glazing unit.

The operation of removing the coating is effected by an abrasive grinding wheel and must be performed in an optimum manner, i.e. the coating must be removed completely. The quality of the operation is checked by testing, with specific instruments, that there is no electrical conductivity within the ground region.

However, each glass pane is generally obtained from a larger sheet and, in order to obtain glass panes that are to size and have a ground perimetric strip, i.e., with the coating removed, it is necessary to perform several operations starting from the removal of the coating by means of a grinding wheel along a predefined path.

Subsequently, or sometimes even simultaneously in some conventional machines for cutting flat glass panes, the sheet is scored along the same path, indicatively but not necessarily along the centerline, and finally parted, obtaining the desired end product.

EP0517176 discloses a system for grinding the sheet before parting it in two pieces.

However, the coating of the low-emissivity glass panes is extremely delicate. In fact the coating may be scratched very easily and may also oxidize if touched with bare hands. Also, the coating ages very rapidly if the pane is left in store too long before being assembled.

In order to obviate these problems, which are strongly felt by glass manufacturers for obvious reasons, a low-emissivity glass sheet has been recently introduced to the market which is delivered to glass manufacturers with a protective plastic film. The protective film, also known as "TPF" (Temporary Protective Film) is applied to the entire surface of the sheet to protect the coating from any mechanical scratches and from any damage caused by atmospheric agents (water, humidity, ...).

This protective film is certainly helping glass manufacturers to preserve the integrity of the low-emissivity glass pane, but it has generated great difficulties as regards the first step of the working of the sheet, i.e., the removal of the low-emissivity coating that is of course below the protective film.

In practice, before proceeding with the removal of the layer of low-emissivity metallic oxides it is necessary to remove the protective film along a predefined path.

To date, the only known method for removing the protective film and the low-emissivity coating is by means of a peripheral abrasive grinding wheel, which can be used substantially in two different manners.

A first system has a single peripheral grinding wheel and a suction system which, by passing over the glass pane, simultaneously removes the protective film and the underlying low-emissivity coating.

A second system has two different grinding wheels: the first wheel removes the protective film, and the second one is for finishing and for completely removing the low-emissivity coating.

However, both methods have critical aspects, which are due to the fact that the protective film is made of plastic material, while the low-emissivity coating is constituted by a layer of metal oxides, and therefore they are completely different materials with different workability specifications.

In particular, the processing of the two materials should be differentiated in terms of tools to be used, of advancement speed and of type of processing residue that must be removed from the sheet being processed and that in one case is constituted by shavings or particles of plastic of the film while in the other case it is constituted by extremely fine metallic powder.

The above problems are particularly evident when one intends to process two materials with a grinding wheel that is not specific for one material or for the other, with the result that the film is heated and forms a coat that adheres to the underlying low-emissivity coating, making it difficult to remove it completely and satisfactorily.

Also, shavings or plastic particles are produced which are difficult to remove completely and, also due to an electrostatic effect, adhere to the glass pane, to the mechanical parts of the machine and to the collection and filtering devices.

The systems with two specific grinding wheels still have the problem of the complete suction of the residues of film and, in a lesser but still critical manner, also the problem that the protective film coat adheres to the underlying low-emissivity coating.

EP1777201 discloses an apparatus for stripping a glass plate coated with a protective film in order to cut the glass plate.

US/2005/056127 discloses a method for cutting apart a glass substrate by scribing the glass substrate without being affected by the presence of a deposited film formed thereon and without scratching the deposited film.

The aim of the invention is to solve the above problems, by providing an apparatus for treating the surface of sheet elements, particularly glass sheets and the like, that allows to remove the film in a clean manner, i.e., without leaving processing residues on the sheet, both along rectilinear paths and along contoured paths.

Within the scope of this aim, a particular object of the invention is to provide an apparatus that does not produce shavings and removes the film completely along a definite path.

Another object of the invention is to provide an apparatus that allows to provide a completely free low-emissivity surface to the subsequent processing tool, without the interposition of any coat that might dirty the processing grinding wheel and thus reduce the required quality of the removal of the coating.

Another object of the invention is to provide an apparatus that allows to considerably reduce the processing time.

A further object of the invention is to provide an apparatus that does not limit in any way the width of the strip along which both the protective film and the low-emissivity coating are removed.

This aim, these objects and others that will become better apparent hereinafter are achieved by an apparatus for treating the surface of glass sheets, comprising a structure that can move with respect to a worktable adapted to support at least one sheet to be processed; said sheet having at least one face that is covered by a coating layer; said apparatus being characterized in that it comprises a means for scoring said coating layer and a means for removing the scored coating layer.

Further characteristics and advantages will become better apparent from the description of preferred but not exclusive embodiments of an apparatus according to the invention, illustrated by way of non-limiting example in the accompanying drawings, wherein:
Figure 1 is a schematic perspective view of a machine having the apparatus according to the invention;
Figure 2 is an enlarged-scale view of a portion of the machine of the preceding figure;
Figure 3 is a perspective view of the apparatus according to the invention;

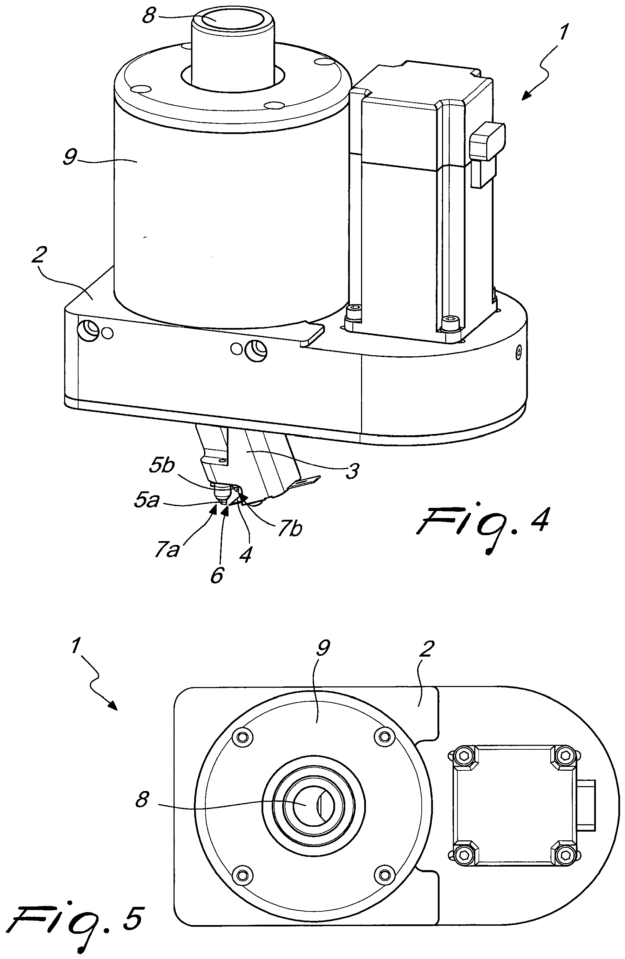

Figure 4 is another perspective view of the apparatus according to the invention;
Figure 5 is a top view of the apparatus according to the invention;

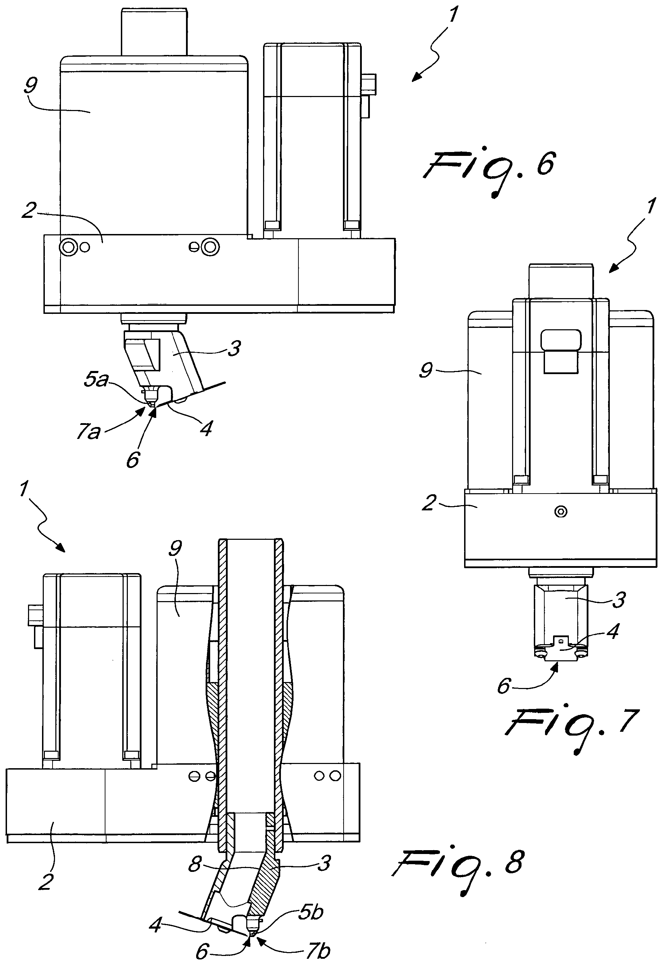

Figure 6 is a side view of the apparatus according to the invention;
Figure 7 is a rear view of the apparatus according to the invention;
Figure 8 is a side cutout view of the apparatus according to the invention.

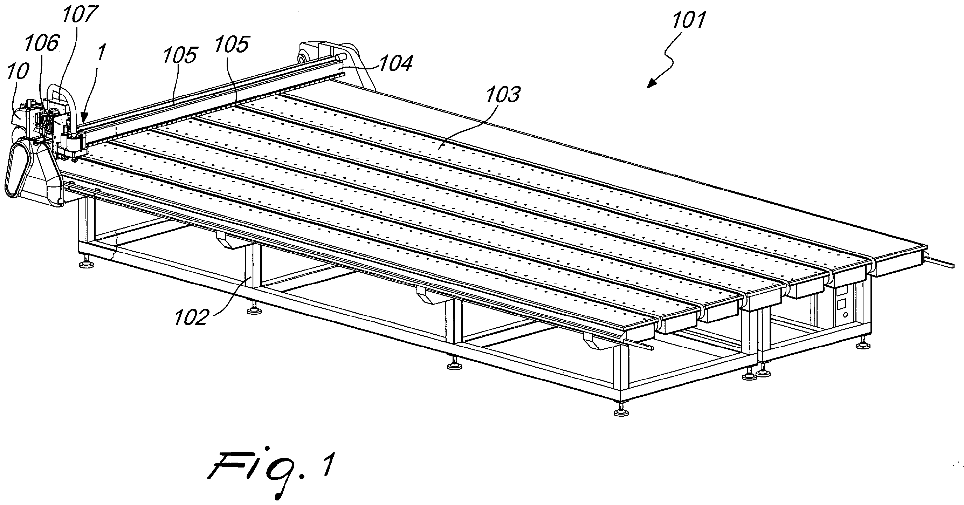

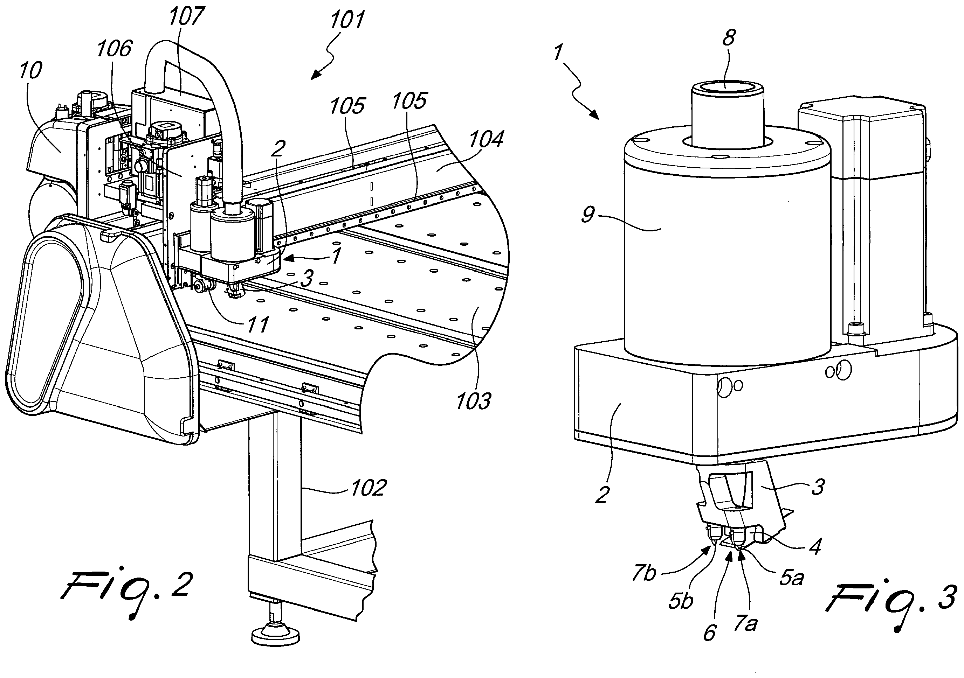

Figures 1 and 2 show an example of a machine having an apparatus for treating the surface of sheet elements, particularly glass sheets and the like, according to the invention.

In the illustrated example, the machine has a cutting table 101 adapted to support monolithic glass panes.

It will be apparent to the person skilled in the art that the apparatus according to the present invention may also be used on machines with other configurations, different from the example herewith described.

For example, the apparatus according to the invention may be installed on machines that only perform grinding, i.e., special machines usually installed as first element at the beginning of the assembly lines of glazing unit panels, on which the glass pane, already previously cut to size, is loaded and is indeed ground along its perimeter.

Another example of use of the apparatus according to the present invention is with machines for cutting laminated glass which, as is known, is a particular type of glass composed of two glass sheets with the interposition of a transparent film of polyvinyl butyral, which renders this type of glass structurally tougher and prevents it, if broken, from causing the fall of pieces and/or splinters on the outside, to the advantage of the safety of nearby people.

In general, these machines, among other things, use two cutting heads, one for scoring the upper sheet and the other one for scoring the lower sheet, which work simultaneously by sliding along an axis. The apparatus according to the invention may be applied easily both on the upper head and on the lower head.

In the herewith described embodiment, the cutting table 101 has a footing 102, which supports a worktable 103 adapted to support at least one sheet to be processed, which has at least one face covered by a coating layer.

A frame 104, mounted above the worktable 103, is configured to translate longitudinally with respect to the worktable 103.

Linear guides 105 extend along the frame 104 and support a slider 106 which carries the apparatus according to the invention, generally designated by the reference numeral 1.

The apparatus 1 includes a means for scoring the coating layer that covers the sheet being processed and a means for removing the scored coating layer.

In the illustrated embodiment, the means for removing the scored coating layer comprises a removal blade 4 having a cutting edge 6 that is substantially parallel to the worktable 103.

Advantageously, the removal blade 4 is inclined by a given angle with respect to the worktable 103, so as to facilitate the removal of the coating layer.

The blade 4 is mounted on a tool 3 that is supported by a structure 2 that is mechanically associated with the slider 106.

Two scoring blades 5a and 5b are arranged on the sides of the removal blade 4 and constitute the means for scoring the coating layer.

The scoring blades 5a and 5b are arranged so that their cutting edges 7a and 7b are transverse to the worktable 103.

According to a further embodiment of the invention, not shown, the apparatus 1 also includes a manual or motorized device that is suitable to modify the mutual distance between the scoring blades 5a and 5b.

It should be noted that all the cutting edges 6, 7a and 7b are directed along the direction according to which the tool 3 is intended to advance and work.

With this arrangement, during the normal advancement of the tool 3, the cutting edges 7a and 7b of the scoring blades 5a and 5b are in an forward position with respect to the cutting edge 6 of the removal blade 4.

Advantageously, an opening 8, provided in the tool 3 at the removal blade 4, is connected to a suction means 107, which is integral with the slider 106 and is controlled by a system for collecting the material removed from the sheet being processed.

Conveniently, the tool 3 can be maneuvered by means of a positioning device 9, which adjusts its orientation and actuates its rising/descent motions with respect to the worktable 103.

In practice, by virtue of the positioning device 9, the tool 3 is capable of performing any type of path, rectilinear, curvilinear, open or closed, and can descend until it brings the blades 4, 5a and 5b into contact with the sheet to be processed.

In the embodiment shown in Figures 1 and 2, the apparatus 1 is combined with a peripheral abrasive grinding wheel 10 and with a sheet scoring device 11, which are installed in an offset position with respect to the tool 3.

With this configuration it is possible to clear the areas of interest of the sheet being processed of the surface layer of protective film by means of the tool 3 and perform with the same machine also the grinding and the scoring operation of the sheet.

In particular, if the tool 3 traces a rectilinear path, along a direction that substantially coincides with the line that joins its working point with the working point of the abrasive grinding wheel 10, the removal of the protective film and the grinding operation can be performed substantially simultaneously.

According to further embodiments of the invention, not shown in the drawings, the means for removing the scored coating layer may include other types of tool, such as for example a rubber coated peripheral grinding wheel, or an air blade.

The operation of the apparatus according to the invention is simple and intuitive.

In fact, in order to clear precise areas of a sheet from a removable surface layer it is sufficient to arrange the sheet on the worktable 103 and program the movements of the apparatus 1 that will perform all the necessary operations.

In the specific case, the tool 3 is lowered with respect to the worktable 103 until the blades 4, 5a and 5b make contact with the sheet; then it begins to advance and work according to the preset path.

During advancement, the scoring blades 5a and 5be cut the surface layer over its entire depth, forming a strip that is delimited by a pair of parallel cuts, while the removal blade 4 lifts the strip, which is thus separated from the sheet.

It should be noted that, while the center distance between the scoring blades 5a and 5b is fixed, it is in any case possible to provide strips that have greater widths by performing multiple passes.

Evidently, in this case, at each pass a different portion of the surface layer would be removed so that at the end of the multiple passes the band of interest of the surface layer is freed completely.

Advantageously, during the advancement of the tool 3, the removed material is aspirated by means of the opening 8 and removed by the suction means 107.

The optional abrasive grinding wheel 10 and/or the scoring device 11 allows to complete the operations on the sheet to be processed.

From what has been described above it is therefore evident that the apparatus according to the invention is advantageously used, for example, for glass sheets provided with a low-emissivity coating surmounted by an adaptive protective film.

In this case, in fact, it is possible to first remove and take away the protective film along a predetermined path by using the tool 3.

Subsequently, or even simultaneously depending on the relative position of the tools, the low-emissivity coating is removed by means of the abrasive grinding wheel 10 along the same path previously deprived of the film, and the glass sheet is scored with the scoring device 11 preferably but not necessarily in the centerline of the ground strip.

At this point it is possible to part the processed and scored sheet, obtaining glass panes that are cut to size, have their edge deprived of the protective coating and of the low-emissivity coating, and have the internal part still protected by the plastic film.

Evidently, if the machine is preset to process glass panes that are already cut to size, it is not necessary to proceed with the operations for scoring and parting the sheet.

In practice it has been found that the apparatus according to the invention, fully achieves the intended aim, allowing to remove the protective film without leaving any processing residue on the sheet, both along rectilinear paths and along contoured paths.

Also, the apparatus according to the invention prevents the generation of shavings which, also due to an electrostatic effect, might be scattered all over the glass sheet, in addition to adhering to the parts of the machine and to the components for collecting the processing residues.

Another advantage of the invention is that the low-emissivity surface may be completely freed with reduced processing times while ensuring the highest quality in removing the low-emissivity coating.

## Claims

1. An apparatus for treating the surface of glass sheets, comprising a structure (2) that can move with respect to a worktable (103) adapted to support at least one sheet to be processed; said sheet having at least one face that is covered by a coating layer; said apparatus further comprising a means (5a, 5b) for scoring said coating layer and a means (4) for removing the scored coating layer; wherein it comprises at least one opening (8) at said means (4) for removing the scored coating layer; said means for scoring said coating layer comprising a tool (3), associated with said structure (2);
said tool (3) comprising a pair of scoring blades (5a, 5b) that are mutually parallel; said scoring blades (5a, 5b) having cutting edges (7a, 7b) that are arranged transversely to said worktable (103); said means for removing the scored coating layer comprising at least one removal blade (4) associated with said tool (3); said removal blade (4) having a cutting edge (6) that is arranged parallel to said worktable (103); said apparatus being **characterized in that** said removal blade (4) is flanked by said scoring blades (5a, 5b); said opening (8) being connected to a suction means (107).

2. The apparatus according to claim 1, **characterized in that** the cutting edges (6, 7a, 7b) of said blades (4, 5a, 5b) are directed in the direction along which said tool (3) advances and works.

3. The apparatus according to claim 1, **characterized in that** the cutting edges (7a, 7b) of said scoring blades (5a, 5b) are in a forward position with respect to the cutting edge (6) of said removal blade (4).

4. The apparatus according to claim 1, **characterized in that** said removal blade (4) is angled with respect to said worktable (103).

5. The apparatus according to claim 1, **characterized in that** it comprises a means for changing the center distance between said scoring blades (5a, 5b).

6. The apparatus according to claim 5, **characterized in that** it comprises a means (9) for positioning said tool (3) with respect to said worktable (103).

7. The apparatus according to claim 1, **characterized in that** said means for removing the scored coating layer comprises at least one rubber coated grinding wheel.

8. The apparatus according to claim 1, **characterized in that** said means for removing the scored coating layer comprises an air blade.

9. A machine for the surface processing of glass sheets, comprising an apparatus according to one or more of the preceding claims, **characterized in that** it comprises a worktable (103) having a moving supporting frame (104) supporting said apparatus for the surface processing of said glass sheets.

10. The machine according to claim 9, **characterized in that** it comprises a means (10) for grinding said sheets in combination with said apparatus.

11. The machine according to claim 9, **characterized in that** it comprises a means for scoring said sheets in combination with said apparatus.

## Patentansprüche

1. Eine Vorrichtung zur Behandlung der Oberfläche von Glasscheiben, die eine Struktur (2) umfasst, die sich mit Bezug auf einen Werktisch (103) bewegen kann, der ausgebildet ist, um mindestens eine zu bearbeitende Scheibe zu tragen; wobei die Scheibe mindestens eine Seite hat, die mit einer Beschichtung bedeckt ist; wobei die Vorrichtung weiter ein Mittel (5a, 5b) zum Einkerben der Beschichtung und ein Mittel (4) zum Entfernen der eingekerbten Beschichtung umfasst; wobei sie mindestens eine Öffnung (8) an dem Mittel (4) zum Entfernen der eingekerbten Beschichtung umfasst; wobei das Mittel zum Einkerben der Beschichtung ein mit der Struktur (2) verbundenes Werkzeug (3) umfasst, wobei das Werkzeug (3) ein Paar von Kerbmessern (5a, 5b) umfasst, die zueinander parallel sind, wobei die Kerbmesser (5a, 5b) Schneidkanten (7a, 7b) haben, die quer zu dem Werktisch (103) angeordnet sind; wobei die Mittel zum Entfernen der eingekerbten Beschichtung mindestens ein Schicht-Abziehmesser (4) umfassen, das mit dem Werkzeug (3) verbunden ist; wobei das Schicht-Abziehmesser (4) eine Schneidkante (6) hat, die parallel zu dem Werktisch (103) angeordnet ist; wobei die Vorrichtung **dadurch gekennzeichnet ist, dass** das Schicht-Abziehmesser (4) von den Kerbmessern (5a, 5b) flankiert ist; wobei die Öffnung (8) an ein Saugmittel (107) angeschlossen ist.

2. Die Vorrichtung gemäß Anspruch 1, **dadurch gekennzeichnet, dass** die Schneidkanten (6, 7a, 7b) der Messer (4, 5a, 5b) in die Richtung weisen, entlang derer das Werkzeug (3) sich vorwärts bewegt und arbeitet.

3. Die Vorrichtung gemäß Anspruch 1, **dadurch gekennzeichnet, dass** die Schneidkanten (7a, 7b) der Kerbmesser (5a, 5b) sich in einer Position vor der Schneidkante (6) des Schicht-Abziehmessers (4) befinden.

4. Die Vorrichtung gemäß Anspruch 1, **dadurch gekennzeichnet, dass** das Schicht-Abziehmesser (4) im Verhältnis zu dem Werktisch (103) winklig ist.

5. Die Vorrichtung gemäß Anspruch 1, **dadurch gekennzeichnet, dass** sie ein Mittel zur Änderung des Mittenabstands zwischen den Kerbmessern (5a, 5b) umfasst.

6. Die Vorrichtung gemäß Anspruch 5, **dadurch gekennzeichnet, dass** sie ein Mittel (9) zur Positionierung des Werkzeugs (3) im Verhältnis zu dem Werktisch (103) umfasst.

7. Die Vorrichtung gemäß Anspruch 1, **dadurch gekennzeichnet, dass** das Mittel zum Entfernen der eingekerbten Beschichtung mindestens eine gummibeschichtete Schleifscheibe umfasst.

8. Die Vorrichtung gemäß Anspruch 1, **dadurch gekennzeichnet, dass** das Mittel zum Entfernen der eingekerbten Beschichtung ein Luftmesser umfasst.

9. Eine Maschine zur Oberflächenbehandlung von Glasscheiben, die eine Vorrichtung gemäß einem oder mehreren der obigen Ansprüche umfasst, **dadurch gekennzeichnet, dass** sie einen Werktisch (103) mit einem beweglichen Tragrahmen (104) umfasst, der die Vorrichtung zur Oberflächenbehandlung der Glasscheiben trägt.

10. Die Maschine gemäß Anspruch 9, **dadurch gekennzeichnet, dass** sie ein Mittel (10) zum Schleifen der Scheiben in Kombination mit der Vorrichtung umfasst.

11. Die Maschine gemäß Anspruch 9, **dadurch gekennzeichnet, dass** sie ein Mittel zum Einkerben der Scheiben in Kombination mit der Vorrichtung umfasst.

## Revendications

1. Appareil de traitement de la surface de feuilles de verre, comprenant une structure (2) qui peut se déplacer par rapport à une table de travail (103) apte à supporter au moins une feuille à traiter; ladite feuille ayant au moins une face qui est couverte d'une couche de revêtement; ledit appareil comprenant en outre un moyen (5a, 5b) d'incision de ladite couche de revêtement et un moyen (4) de retrait de la couche de revêtement incisée; sachant qu'il comprend au moins une ouverture (8) au niveau dudit moyen (4) de retrait de la couche de revêtement incisée; ledit moyen d'incision de ladite couche de revêtement comprenant un outil (3) associé à ladite structure (2); ledit outil (3) comprenant une paire de lames d'incision (5a, 5b) qui sont mutuellement parallèles, lesdites lames d'incision (5a, 5b) comportant des arêtes de coupe (7a, 7b) qui sont disposées transversalement à ladite table de travail (103); ledit moyen de retrait de la couche de revêtement incisée comprenant au moins une lame de retrait (4) associée audit outil (3); ladite lame de retrait (4) ayant une arrête de coupe (6) qui est disposée parallèlement à ladite table de travail (103); ledit appareil étant **caractérisé en ce que** ladite lame de retrait (4) est flanquée par lesdites lames d'incision (5a, 5b); ladite ouverture (8) étant connectée à un moyen d'aspiration (107).

2. Appareil selon la revendication 1, **caractérisé en ce que** les arêtes de coupe (6, 7a, 7b) desdites lames (4, 5a, 5b) sont dirigées dans la direction dans laquelle ledit outil (3) avance et fonctionne.

3. Appareil selon la revendication 1, **caractérisé en ce que** lesdites arêtes de coupe (7a, 7b) desdites lames d'incision (5a, 5b) sont dans une position avant par rapport à l'arête de coupe (6) de ladite lame de retrait (4).

4. Appareil selon la revendication 1, **caractérisé en ce que** ladite lame de retrait (4) est en angle par rapport à ladite table de travail (103).

5. Appareil selon la revendication 1, **caractérisé en ce qu'**il comprend un moyen de modification de la distance centrale entre lesdites lames d'incision (5a, 5b).

6. Appareil selon la revendication 5, **caractérisé en ce qu'**il comprend un moyen (9) de positionnement dudit outil (3) par rapport à ladite table de travail (103).

7. Appareil selon la revendication 1, **caractérisé en ce que** ledit moyen de retrait de la couche de revêtement incisée comprend au moins une roue de broyage revêtue de caoutchouc.

8. Appareil selon la revendication 1, **caractérisé en ce que** ledit moyen de retrait de la couche de revêtement incisée comprend au moins une lame d'air.

9. Machine destinée au traitement de surface de feuilles de verre, comprenant un appareil selon une ou plusieurs des revendications précédentes, **caractérisé en ce qu'**elle comprend une table de travail (103) dotée d'un cadre support en mouvement (104) supportant ledit appareil pour le traitement de surfaces desdites feuilles de verre.

10. Machine selon la revendication 9, **caractérisé en ce qu'**elle comprend un moyen (10) de broyage desdites feuilles en combinaison avec ledit appareil.

11. Machine selon la revendication 9, **caractérisé en ce qu'**elle comprend un moyen d'incisions desdites feuilles en combinaison avec ledit appareil.
